# EUROPÄISCHE PATENTSCHRIFT

(11) **EP 3 380 792 B1**
(45) Veröffentlichungstag und Bekanntmachung des Hinweises auf die Patenterteilung: **23.10.2024**
(21) Anmeldenummer: 16800990.0
(22) Anmeldetag: 24.11.2016
(51) Int. Cl.: F24D 5/02, C25B 1/04, G06Q 50/06, H01M 8/04014, H01M 8/0662, H01M 8/247, H01M 10/627, H01M 16/00, H02J 3/32, F24D 18/00, F24D 103/13, H01M 10/66, F24D 101/30, H01M 10/613

(54) **HAUSENERGIEZENTRALE UND VERFAHREN ZUM BETREIBEN EINER HAUSENERGIEZENTRALE**
DOMESTIC POWER PLANT AND METHOD FOR OPERATING A DOMESTIC POWER PLANT
CENTRALE D'ÉNERGIE DOMESTIQUE ET PROCÉDÉ POUR FAIRE FONCTIONNER UNE CENTRALE D'ÉNERGIE DOMESTIQUE

(30) Priorität: 25.11.2015 DE 102015120454
(43) Veröffentlichungstag der Anmeldung: 03.10.2018
(73) Patentinhaber: HPS Home Power Solutions GmbH, 12489 Berlin (DE)
(72) Erfinder: HIERL, Andreas, 12526 Berlin (DE); RADUE, Dirk, 12685 Berlin (DE); SCHNEIDER, Gunnar, 15745 Wildau (DE); BENZ, Uwe, 78267 Aach (DE); SCHRÖDER, Kevin, 13187 Berlin (DE); ABUL-ELLA, Zeyad, 14195 Berlin (DE)
(74) Vertreter: Eisenführ Speiser
(86) Internationale Anmeldenummer: PCT/EP2016/078691
(87) Internationale Veröffentlichungsnummer: WO 2017/089469

(56) Entgegenhaltungen:
- EP-A2- 1 475 577
- WO-A1-2010/075602
- WO-A1-99/57335
- WO-A2-2012/113932
- US-A1- 2002 062 650

## Beschreibung

Die vorliegende Erfindung betrifft eine Hausenergiezentrale sowie ein Verfahren zum Betreiben einer Hausenergiezentrale.

Hausenergiezentralen sind grundsätzlich aus dem Stand der Technik bekannt und dienen der Energieversorgung eines Wohnhauses mit Strom und/oder Wärme.

Es ist Aufgabe der vorliegenden Erfindung ein energetisch günstige und sichere Hausenergiezentrale bereitzustellen. Es ist ebenfalls Aufgabe der Erfindung ein Verfahren zum Betreiben einer Hausenergiezentrale anzugeben.

Bezüglich der Hausenergiezentrale wird die Aufgabe gelöst durch eine Hausenergiezentrale, insbesondere zur autarken Energieversorgung eines Wohnhauses mit Strom und/oder Wärme, mit einem Gehäuse das einen Außenluftanschluss und einen Fortluftanschluss aufweist, einem Lüftungsgerät aufweisend einen Wärmetauscher, wobei das Lüftungsgerät derart mit dem Außenluftanschluss verbunden ist, dass Außenluft in einem ersten Luftstrang über den Wärmetauscher, oder über einen Außenluftbypass an dem Wärmetauscher vorbei, in einen Zuluftstrang der Hausenergiezentrale strömen kann, wobei der Zuluftstrang zumindest teilweise innerhalb des Gehäuse verläuft.

Die Hausenergieanlage ist ebenfalls ausgestattet mit einem Abluftstrang, in dem ein durch das Lüftungsgerät bewirkter Luft-Volumenstrom, innerhalb des Gehäuses weitergeführt werden kann, einer Brennstoffzelleneinheit, die bevorzugt innerhalb des Gehäuses angeordnet und derart in den Abluftstrang eingebunden ist, dass unerwünschtes in der Brennstoffzelleneinheit freiwerdendes Gas durch den Luft-Volumenstrom verdünnt und zusammen mit Abwärme aus der Brennstoffzelleneinheit ausgetragen werden kann und einer Speicher-Batterieeinheit, die bevorzugt innerhalb des Gehäuses angeordnet ist und derart in den Abluftstrang eingebunden ist, dass unerwünschtes in der Speicher-Batterieeinheit freiwerdendes Gas durch den Luft-Volumenstrom verdünnt und zusammen mit Abwärme aus der Brennstoffzelleneinheit ausgetragen werden kann.

Die Hausenergieanlage ist ebenfalls ausgestattet mit einem zweitem Luftstrang, der mit dem Abluftstrang verbunden ist, wobei der zweite Luftstrang des Lüftungsgerätes über den Wärmetauscher des Lüftungsgerätes mit dem ersten Luftstrang wärmegekoppelt ist, so dass über den zweiten Luftstrang nach außen geführte Abluft bedarfsweise wenigstens einen Teil der in ihr enthaltenen Wärmeenergie über den Wärmetauscher des Lüftungsgerätes an den ersten Luftstrang abgegeben kann und gleichzeitig die unerwünschten durch den Luft-Volumenstrom verdünnten Gase mit dem Luft-Volumenstrom über den Außenluftanschluss ausgetragen werden können.

Die erfindungsgemäße Hausenergiezentrale hat den Vorteil, dass die von ihr umfasste Brennstoffzelleneinheit, die Speicher-Batterieeinheit und/oder die Hausenergiezentrale selbst nicht zwingend technisch vollständig dicht ausgebildet sein muss. Vielmehr wird dadurch, dass die unerwünschten durch den Luft-Volumenstrom verdünnten Gase mit dem Luft-Volumenstrom über den Außenluftanschluss ausgetragen werden können, die Bildung explosiver Gasgemische in der Hausenergiezentrale vermieden. Somit ist die erfindungsgemäße Hausenergiezentrale zum einen sicher betreibbar, zum anderen kostengünstig herstellbar.

Ein unerwünschtes in der Brennstoffzelleneinheit freiwerdendes Gas kann beispielsweise wasserstoffhaltiges Leckage-Gas sein. Ein unerwünschtes in der Speicher-Batterieeinheit freiwerdendes Gas kann beispielsweise Schwefelwasserstoff (Blei-Akkumulator) oder bei entsprechender Temperatur Diethylcarbonat (Lithium-Ionen-Akkumulator) sein.

Dadurch, dass nach außen geführte Abluft bedarfsweise wenigstens einen Teil der in ihr enthaltenen Wärmeenergie, also z.B. der Abwärme der Brennstoffzelleneinheit und der Speicher-Batterieeinheit, über den Wärmetauscher des Lüftungsgerätes an den ersten Luftstrang abgegeben kann, ist die Hausenergiezentrale energetisch günstig ausgestaltet. Ein vergleichsweise geringer elektrischer Wirkungsgrad der Brennstoffzelleneinheit kann durch die Abwärmenutzung kompensiert werden.

Die Erfindung schließt weiter die Erkenntnis ein, dass Hausenergiezentralen mit Wasserstoff als Energieträger erhöhten Anforderungen an die Sicherheit genügen müssen, da Wasserstoff in einem weiten Mischungsverhältnis mit Sauerstoff bzw. Luft explosionsfähige Gemische bildet. Die Erfindung schließt auch die Erkenntnis ein, dass die Verwendung von Ex-geschützten Komponenten insbesondere in Privathäusern kaum wirtschaftlich vertretbar wäre. Durch die erfindungsgemäße Hausenergiezentrale hingegen wird ein alternatives Sicherheitskonzept bereitgestellt, das darin besteht, dass evtl. aus einer Elektrolyseeinheit und/oder einer Brennstoffzelleneinheit und/oder aus anderen Komponenten austretender Wasserstoff durch Verdünnung mit Abluft der Hausenergiezentrale deutlich unter seine Zündgrenze verdünnbar ist. Die sicherheitstechnisch relevante Funktion des Vorhandenseins eines hinreichend großen Kühl- und Spül-Volumenstroms zur Verdünnung potentiell austretender und/oder im Betrieb bestimmungsgemäß austretender H2-reicher Gase werden bevorzugt über eine geeignete Sensorik, vorzugsweise über einen Strömungswächter und/oder eine Differenzdruckmessung und/oder über eine ex-geschützten H2-Sensor überwacht.

Das Gehäuse der Hausenergiezentrale kann mit allen darin ausgeführten Teilräumen vom Kühl- und Spül-Volumenstroms, geführt durch den Abluftstrang, durchströmt werden. Der Abluftstrang kann so ausgelegt sein, dass er die auftretende Abwärme der Komponenten aufnehmen kann und gleichzeitig auch eventuell austretenden Wasserstoff aufnimmt und auf Gesamtkonzentrationen deutlich unterhalb der unteren Zündgrenze (UZG ist 4 % H2 in Luft) verdünnt, abtransportiert und als Abluft in die Umgebung abgibt.

Die Speicher-Batterieeinheit ist bevorzugt innerhalb des Gehäuses der Hausenergiezentrale, bevorzugt innerhalb eines eigenen Teilraums. Die Speicher-Batterieeinheit kann außerhalb des Gehäuses der Hausenergiezentrale angeordnet sein. In diesem Fall verläuft der Abluftstrang abschnittsweise außerhalb des Gehäuses der Hausenergiezentrale. In einer besonders bevorzugten Ausgestaltung weist die Hausenergiezentrale einen ein separates, ebenfalls hinreichend luftdichtes Gehäuse für die Speicher-Batterieeinheit auf, welches eine Zu- und Abführung für den Kühl- und Spül-Volumenstrom aufweist über die der Kühl- und Spül-Volumenstrom zu- und abgeführt werden kann. Insbesondere bei Bleibatterien ist eine effiziente Kühlung zur Erreichung einer hohen Lebensdauer vorteilhaft, die eine homogene Temperaturverteilung mit Temperaturabweichungen von < 5 K, vorzugsweise < 3 K sicherstellt und gleichzeitig eine mittlere Temperatur von vorzugsweise < 25 °C ermöglicht. In einer besonders vorteilhaften Ausführung wird der Kühl- und Spül-Volumenstrom zunächst in ein druckverlustarmes Luftverteilervolumen geführt, umströmt dann die einzelnen Batterie-Zellen oder Batterie-Zellblöcke in definierten Spalten mit definierten Druckverlusten, welche deutlich höher als diejenigen in den Verteiler- und Sammelvolumina sind und wird in einem druckverlustarmen Sammelvolumen gesammelt und von dort abgeleitet. Vorteil dieser Anordnung ist eine sehr gleichmäßige Verteilung und Führung des Kühl- und Spül-Volumenstroms um die Batteriezellen und damit eine besonders effiziente und gleichmäßige Kühlung der einzelnen Zellen. Etwaige unerwünscht aus der Speicherbatterie austretende Gase, insbesondere H2-haltige Gase, welche beim Überladen der Speicherbatterieeinheit entstehen können, können über die Abluft ausgetragen werden.

Die Komponenten der Hausenergiezentrale können in einem Gehäuse oder in mehreren, über den Abluftstrang miteinander verbundenen, Gehäusen angeordnet, welche gegenüber der Umgebung technisch hinreichend luftdicht sind. Als technisch hinreichend dicht soll hier gelten, wenn der Verlust an Luftvolumenstrom über die Gehäusegrenzen kleiner als 20%, besonders bevorzugt kleiner als 5%, des gesamten Kühl- und Spül-Volumenstroms ist.

Bezüglich der Wasserstoff-Sicherheit werden, wo immer möglich, technisch dauerhaft dichte Komponenten und Verbindungselemente eingesetzt. Komponenten, die bauartbedingt und funktionsbedingt nicht als dauerhaft technisch dicht ausgeführt werden können, werden in separaten Teilräumen zusammengefasst und Zündquellen werden vermieden und/oder ex-geschützte Bauteile werden verwendet. Durch wiederkehrende Dichtheitstests, vorzugsweise während des Betriebes wird eine hinreichende Dichtheit der Komponenten gegenüber H2-Austritt sichergestellt.

In einer bevorzugten Ausgestaltung wird die Hausenergiezentrale bereitgestellt mit einem Zuluftanschluss und einem Abluftanschluss zum Verbinden der Hausenergiezentrale mit wenigstens einem zentral zu lüftenden Aufenthaltsraum derart, dass ein in den Zuluftstrang der Hausenergiezentrale strömender Luftstrom zunächst dem Aufenthaltsraum als Zuluft zugeführt werden kann und aus dem Aufenthaltsraum stammende Abluft in dem Abluftstrang der Hausenergiezentrale weitergeführt werden kann. Vorteilhafterweise kann somit eine kontrollierte Wohnraumlüftung (KWL) mittels der Hausenergiezentrale erfolgen, wobei aus der Hausenergiezentrale abgeführte Wärme für die Erwärmung des Aufenthaltsraums nutzbar ist. Neben dem Lüftungsgerät können weitere für eine KWL typische Komponenten wie Filter, Wärmetauscher, Klappen in der Hausenergiezentrale integriert sein, oder so ausgeführt sein, dass sie sich modular an das Gehäuse der Hausenergiezentrale anschließen lassen. Insbesondere im Zusammenhang mit einer KWL hat es sich als vorteilhaft herausgestellt, wenn die Brennstoffzelleneinheit luftgekühlt, bevorzugt ausschließlich luftgekühlt ist. Die Brennstoffzelleneinheit der Brennstoffzelleneinheit besitzt vorzugsweise Proton-Exchange-Membranen, so dass die Brennstoffzelleneinheit eine PEM-Brennstoffzelleneinheit ist.

Um die dem Aufenthaltsraum zuzuführende Zuluft im Sommer gegebenenfalls kühlen zu können, kann dem ersten Luftstrang des Lüftungsgerätes auch eine Kühleinheit nachgeschaltet sein. Diese kann beispielsweise einen zweiten Wärmetauscher und eine mit diesem Wärmetauscher verbundene Kältemaschine aufweisen. Die Kältemaschine ist vorzugsweise eine Kompressionskältemaschine.

Der Zuluftstrang kann unmittelbar mit dem Abluftstrang verbunden sein. Dies bietet sich beispielsweise bei Bestandsbauten an, bei denen keine kontrollierte Wohnraumlüftung - beispielsweise aus Kostengründen - realisierbar ist. Nutzung der Abwärme der Hausenergiezentrale kann insbesondere (aber nicht ausschließlich) in dieser Alternative über eine mit dem Abluftstrang wärmegekoppelte Wärmepumpe und/oder Gas-Flüssig-Wärmetauscher erfolgen, bevorzugt mit dem Ziel einer Einspeisung der thermischen Energie des Abluftstrangs in den Warmwasser (WW)-Kreislauf eines Hauses. Die Brennstoffzelleneinheit kann flüssigkeitsgekühlt sein und wenigstens zeitweise mit einem Warmwasserspeicher der Hausenergiezentrale wärmegekoppelt sein.

Das Gehäuse der Hausenergiezentrale kann mehrere voneinander getrennte Teilräume aufweisen, die über den Abluftstrang miteinander gekoppelt sind. Bevorzugt werden die einzelnen Teilräume im Gehäuse der Hausenergiezentrale vorzugsweise in Richtung aufsteigender Menge an potentiell emittiertem H2 angeordnet. Gemäß einer der sicherheitstechnischen Priorität nachgeordneten, zweiten Priorität werden die einzelnen Teilräume vorzugsweise gemäß der Anforderung der Betriebstemperatur und/oder der Kühlung und/oder abhängig von verfahrenstechnischen Gesichtspunkten angeordnet. Dabei können Baugruppen mit ähnlichen sicherheitstechnischen Eigenschaften auch in gemeinsamen Teilräumen oder Teilraumgruppen zusammengefasst werden und auch innerhalb dieser Teilraumgruppe in der Durchströmungsreihenfolge gemäß thermischer und/oder verfahrenstechnischer Anforderungen unterschiedlich platziert werden. Dies schließt ein, dass auch innerhalb von Teilraumgruppen Teilräume geschaffen werden, die seriell durchströmt werden.

Beispielsweise erfordert der Einsatz einer Speicher-Batterieeinheit, die Bleibatterien aufweist, als Kurzzeitspeicher verhältnismäßig niedrige Temperaturen, vorzugsweise im Bereich von 20-25 °C. Die Bleibatterie sollte also möglichst nahe am Eingang des Lüftungssystems für den Kühl- und Spül-Volumenstrom angeordnet sein, mit anderen Worten möglichst weit stromaufwärts im Abluftstrang. Da beim Ladevorgang jedoch in geringen Mengen auch H2 entstehen kann, ist die Speicher-Batterieeinheit vorzugsweise strömungsabwärts bezüglich einer, keinen Wasserstoff emittierenden, aber Abwärme erzeugenden Leistungselektronik zu platzieren.

Ebenfalls bevorzugt wird die Hausenergiezentrale bereitgestellt mit einer Elektrolyseeinheit, die innerhalb des Gehäuses angeordnet und derart in den Abluftstrang eingebunden ist, dass unerwünschtes in der Elektrolyseeinheit freiwerdendes Gas durch den LuftVolumenstrom verdünnt und zusammen mit Abwärme aus der Elektrolyseeinheit ausgetragen werden kann.

Durch die vorgesehene Elektrolyseeinheit kann vorteilhafterweise eine überschüssige elektrische Leistung z.B. einer Photovoltaikanlage in zu speichernden Wasserstoff umgesetzt werden. Die Elektrolyseeinheit hat einen eigenen Elektrolyt-/Kühlkreislauf und kann die im elektrochemischen Prozess erzeugte Wärme über geeignete Wärmetauscher an den Kühl- und Spül-Volumenstrom und/oder an einen Warmwasserspeicher abgeben. Die Abwärme über die Komponentenoberflächen wird ebenfalls an den Kühl- und Spül-Volumenstrom übertragen. Damit kann die Abwärme der Elektrolyseeinheit fast vollständig zur Bereitstellung thermischer Energie für den Haushalt genutzt werden.

Die Hausenergiezentrale kann derart ausgestaltet sein, dass der aus der Brennstoffzelleneinheit austretende und dem zweiten Luftstrang des Lüftungsgerätes als Abluft zuführbare Luftstrom derart geführt ist, dass er sich erst mit der aus einem jeweiligen Aufenthaltsraum stammende Abluft mischt nach dem diese die Elektrolyseeinheit durchströmt hat.

Um die energetische Effizient der Hausenergiezentrale weiter zu verbessern, kann eine von der Hausenergiezentrale umfasste Leistungselektronik, beispielsweise ein Solarladereger, ein Inselwechselrichter und/oder ein DC/DC-Wandler in den Abluftstrang eingebunden sein. Die Leistungselektronik kann so von dem Kühl- und Spül-Volumenstrom der Hausenergiezentrale umströmt werden, dass eine effektive Kühlung durch Zwangskonvektion über den Kühl- und Spül-Volumenstrom realisiert wird. Optional können noch andere leistungselektronische Bauteile und/oder elektrotechnische Bauteile und/oder Sensoren integriert sein. Dies hat den Vorteil, dass abweichend zur üblichen Einbauweise einiger leistungselektronischer Bauteile, welche oft auf natürlicher, passiver Konvektionskühlung beruht, durch ein aktives Umströmen und damit effizientere konvektive Kühlung durch den Kühl- und Spül-Volumenstrom der Einbauraum deutlich kompakter gestaltet werden kann.

Besonders bevorzugt weist die Hausenergiezentrale einen Mischbereich auf, der wenigstens zeitweise mit der Brennstoffzelleneinheit derart fluidverbunden ist, dass der Mischbereich ein aus der Brennstoffzelleneinheit austretendes Spülgas aufnehmen kann. Weiter bevorzugt ist der Mischbereich so mit dem Lüftungsgerät verbunden, dass ein aus der Mischbereich austretender Luftstrom zusammen mit dem Spülgas als Abluft dem zweiten Luftstrang des Lüftungsgerätes zugeführt werden kann.

Die Brennstoffzelleneinheit kann einen luftgekühlten Brennstoffzellenstack mit einer offenen Kathode enthalten, bei der bevorzugt die Kühlluft für die Kathode und die Reaktionsluft ein und derselbe Volumenstrom sind, über den vorzugsweise auch das bei der Reaktion in der Brennstoffzelleneinheit entstehende Prozesswasser als Luftfeuchte wieder abgeführt wird. Diese Luftfeuchte kann dazu genutzt werden, durch das Lüftungsgerät erwärmte Außenluft derart mit feuchter Fortluft aus dem Brennstoffzellensystem zu ergänzen, dass die dem Aufenthaltsraum zuzuführende Zuluft eine gewünschte Lufttemperatur und/oder eine gewünschte Luftfeuchtigkeit aufweist. Es hat sich in diesem Zusammenhang als vorteilhaft herausgestellt, wenn die Brennstoffzelleneinheit so mit dem Lüftungsgerät verbunden ist, dass ein in den Zuluftstrang der Hausenergiezentrale strömender Luftstrom auch als indirekte Zuluft zunächst der Brennstoffzelleneinheit und über diese gegebenenfalls indirekt dem jeweiligen Aufenthaltsraum zuführbar ist. Somit kann der Aufenthaltsraum komfortabel mit sauberem Prozesswasser der Brennstoffzelleneinheit luftbeuchtet werden. Ein Verhältnis zwischen direkter und indirekter Zuluft kann einstellbar sein. Ein Verhältnis zwischen Zuluftanteil und Abluftanteil des aus der Brennstoffzelleneinheit austretenden Luftstroms kann einstellbar sein.

Die Brennstoffzelleneinheit kann so mit dem Lüftungsgerät und einem jeweiligen Aufenthaltsraum verbunden sein, dass ein aus der Brennstoffzelleneinheit austretender Luftstrom andererseits als Abluft zusammen mit aus einem jeweiligen Aufenthaltsraum stammender Abluft dem zweiten Luftstrang des Lüftungsgerätes zugeführt werden kann. Derart kann ein Prozesswasser der Brennstoffzelleneinheit an dem Aufenthaltsraum vorbei geführt werden, wenn dessen Raumluft beispielsweise bereits ausreichend beuchtet ist.

Bevorzugt weist die Hausenergiezentrale im Abluftstrang einen Strömungswächter und/oder Ex-geschützten H2-Sensor auf. Alternativ oder zusätzlich kann die Hausenergiezentrale ausgebildet sein, einen Volumenstrom über wenigstens eine Messstelle, beispielweise am Eingang durchströmter Bereiche, in denen H2 freigesetzt werden kann.

In einer bevorzugten Ausgestaltung weist die Hausenergiezentrale einen der Elektrolyseeinheit bzgl. seiner Position im Kühl- und Spül-Volumenstrom nachgeschalteten katalytischen Brenner/Rekombinator auf, der so in den Kühl- und Spül-Volumenstrom der Hausenergiezentrale eingebunden ist, dass der Kühl- und Spül-Volumenstrom über den katalytischen Brenner geführt wird oder führbar ist. Bevorzugt wird die Verbrennungswärme des katalytischen Brenner über einen Wärmetauscher und einen Wasserkreislauf in den Warmwasserspeicher eingekoppelt. Die Komponenten des katalytischen Brenners können vorteilhafterweise äußerlich über den Kühl- und Spül-Volumenstrom gekühlt werden und die warmen Abgase können optional ebenfalls in den Kühl- und Spül-Volumenstrom gegeben werden, in einer besonders bevorzugten Ausführung über den nachgeschalteten Mischbereich.

In einer besonders bevorzugten Anordnung werden im Verlauf des Kühl- und Spül-Volumenstroms zunächst der Lüfter und ggf. weitere lüftungstechnische Einbauten platziert, stromabwärts gefolgt von den Räumen für Elektrik und/oder Leistungselektronik und/oder Sensorik und/oder einem Ultrakurzzeitspeicher-Modul (Supercap) und/oder dauerhaft technisch dichten Komponenten. Da bis zu diesem Punkt der Luftführung keine H2-Emissionen im System zu erwarten sind, kann die Durchströmung bis hierhin sowohl parallel als auch seriell erfolgen. Anschließend wird in der besonders bevorzugten Anordnung der Raum mit dem Kurzzeitenergiespeicher, welcher vorzugsweise als Batteriespeicher ausgeführt ist, durchströmt. Stromabwärts folgt, bevorzugt seriell durchströmt, der mindestens eine Raum für die Elektrolyseeinheit und/oder für die Brennstoffzelleneinheit und/oder für den katalytischen Brenner und/oder für den katalytischen Rekombinator. Weiter stromabwärts folgen, in einer besonders bevorzugten Ausführung, getrennt von den Räumen der vorher beschriebenen Komponenten, ein oder mehrere Räume für die Zumischung H2-haltiger Gase in den Spül-Luftstrom. In diese Mischbereiche können vorteilhaft die Purge-Gas von Brennstoffzelleneinheit und/oder Elektrolyse und/oder die Abgase des Katalytischen Brenners und/oder des Katalytischen Rekombinators und/oder die Kathoden-Abluft einer flüssiggekühlten Brennstoffzelleneinheit eingeleitet und mit dem Kühl- und Spül-Volumenstrom vermischt werden. In einer bevorzugten Anordnung werden der Mischbereich und die dort vorhandenen Zumischstellen hinsichtlich einer verbesserten Vermischung optimiert ausgestaltet.

In einer weiteren bevorzugten Ausgestaltung weist die Hausenergiezentrale eine Purgeanordung zum Spülen der Brennstoffzelleneinheit auf ihrer Anodenseite und/oder der Elektrolyseeinheit auf ihrer Kathodenseite auf. Die Purgeanordnung kann derart in den Kühl- und Spül-Volumenstrom eingebunden sein, dass ein aus der Purgeanordnung austretendes, potentiell H2-reiches Purgegas dem Kühl- und Spül-Volumenstrom zugemischt und als Fortluft aus der Hausenergiezentrale ausgetragen werden kann. In einer besonders bevorzugten Ausgestaltung weist die Purgeanordnung einen expandierbaren Pufferbehälter, bevorzugt einen Faltenbalgspeicher, auf, welcher die sehr hohen aber impulsartig nur ca. 0,5 s andauernden Purge-Volumenströme bei niedrigen Druck zwischenpuffert und verzögert, vorzugsweise innerhalb von ca. 20 s mit deutlich geringerem Volumenstrom an die Mischstelle abgibt. Dies hat den Vorteil, dass der Spülvolumenstrom, welcher benötigt wird, um eine Konzentration der entstehenden Mischung stets unterhalb der unteren Zündgrenze zu halten, deutlich geringer dimensioniert werden kann und/oder die Anforderung an die Mischstelle hinsichtlich der Vermischungsqualität und/oder an die konstruktive und prozesstechnische Gestaltung eines nachgeschalteten katalytischen Rekombinators deutlich verringert werden kann. Die einzelnen Baugruppen der Purge-Anordnung können auf die verschiedenen oben beschriebenen Bereiche der Hausenergiezentrale verteilt werden, entsprechend ihres Potentials zur Freisetzung von Wasserstoff.

Bezüglich des Verfahrens zum Betreiben einer Hausenergiezentrale wird die Aufgabe dadurch gelöst, durch ein Verfahren zum Betreiben einer Hausenergiezentrale, insbesondere einer vorbeschriebenen Hausenergiezentrale, aufweisend die Schritte:
- Führen von Außenluft in einem ersten Luftstrang über einen Wärmetauscher, oder über einen Außenluftbypass an dem Wärmetauscher vorbei, in einen Zuluftstrang der Hausenergiezentrale,
- Weiterführen eines durch das Lüftungsgerät bewirkten Luft-Volumenstroms in einem Abluftstrang der Hausenergiezentrale, der zumindest abschnittsweise innerhalb eines Gehäuses der Hausenergiezentrale verläuft,
- Verdünnen von unerwünschtem in der Brennstoffzelleneinheit freiwerdenden Gases durch den Abluft-Volumenstrom und Austragen des verdünnten Gases zusammen mit Abwärme aus der Brennstoffzelleneinheit,
- Verdünnen von unerwünschtem in der Speicher-Batterieeinheit freiwerdenden Gases durch den Luft-Volumenstrom und Austragen des verdünnten Gases zusammen mit Abwärme aus der der Speicher-Batterieeinheit,
- Führen von Abluft über einen zweitem Luftstrang, der mit dem Abluftstrang verbunden ist, wobei der zweite Luftstrang des Lüftungsgerätes über den Wärmetauscher des Lüftungsgerätes mit dem ersten Luftstrang wärmegekoppelt ist, so dass über den zweiten Luftstrang nach außen geführte Abluft bedarfsweise wenigstens einen Teil der in ihr enthaltenen Wärmeenergie über den Wärmetauscher des Lüftungsgerätes an den ersten Luftstrang abgeben kann und gleichzeitig die unerwünschten durch den Luft-Volumenstrom verdünnten Gase mit dem LuftVolumenstrom über den Außenluftanschluss ausgetragen werden können, so dass die Bildung explosiver Gasgemische in der Hausenergiezentrale vermieden wird und diese sicher betreibbar ist.

Das Verfahren kann den Schritt aufweisen, bevorzugt wenn die Hausenergiezentrale im Zusammenhang mit einer kontrollierten Wohnraumlüftung betrieben wird:
- Führen von außerhalb eines Aufenthaltsraums stammender Außenluft als direkte Zuluft zu einem Aufenthaltsraum oder als indirekte Zuluft zunächst über einen Gas-Gas-Wärmetauscher, welcher Wärme und ggf. Feuchte aus der Fortluft an die Zuluft überträgt und/oder über eine Brennstoffzelleneinheit und danach zu dem Aufenthaltsraum; und/oder
- Führen von aus dem Aufenthaltsraum stammender Abluft als Kühl- und Spül-Volumenstrom zur Spülung und Wärmeaufnahme über die Komponenten der Hausenergiezentrale und optional über einen Luft-Luft-Wärmetauscher zur Übertragung von Wärme und ggf. Feuchte an die Zuluft, insbesondere vor einem Austragen selbiger als Fortluft aus der Hausenergiezentrale.

Das Verfahren kann den Schritt aufweisen, bevorzugt wenn die Hausenergiezentrale nicht im Zusammenhang mit einer kontrollierten Wohnraumlüftung betrieben wird:
- Führen von außerhalb eines Aufenthaltsraums stammender Außenluft als direkte Zuluft zum Hausenergiesystem zunächst über einen Gas-Gas-Wärmetauscher zum Vorwärmen oder optional bei hohen Außentemperaturen im Bypass dazu und Verwendung als Kühl- und Spül-Volumenstrom zur Verdünnung und zum Abtransport brennbarer Gase sowie zur Wärmeaufnahme über die Komponenten der Hausenergiezentrale.

Das erfindungsgemäße Verfahren weist bevorzugt den Schritt auf;
- Auskoppeln von Wärme in einen Warmwasserspeicher über einen Luft-Wasser-Wärmetauscher und/oder einen Luft-Wasser-Wärmetauscher einer Wärmepumpe; und/oder
- Vorwärmen der Zuluft über einen Luft-Luft-Wärmetauscher und Austragen des Kühl- und Spül-Volumenstrom als Fortluft aus der Hausenergiezentrale.

Ausführungsbeispiele der vorliegenden Erfindung werden im Folgenden beispielhaft unter Bezugnahme auf die beigefügten Figur erläutert. Es zeigt:
- Fig. 1: eine schematische Darstellung einer Hausenergiezentrale verbunden mit einem zu lüftenden Aufenthaltsraum und aufweisend eine ausschließlich luftgekühlte Brennstoffzelleneinheit,
- Fig. 2: eine schematische Darstellung einer Hausenergiezentrale verbunden mit einem zu lüftenden Aufenthaltsraum und aufweisend eine flüssigkeitsgekühlte Brennstoffzelleneinheit,
- Fig. 3: eine schematische Darstellung einer Hausenergiezentrale ohne LüftungsAnbindung an einen Aufenthaltsraum und aufweisend eine ausschließlich luftgekühlte Brennstoffzelleneinheit,
- Fig. 4: eine schematische Darstellung einer Hausenergiezentrale ohne LüftungsAnbindung an einen Aufenthaltsraum und aufweisend eine flüssigkeitsgekühlte Brennstoffzelleneinheit, und
- Fig. 5: eine schematische Darstellung eines bevorzugten Ausführungsbeispiels einer erfindungsgemäßen Hausenergiezentrale mit Lüftungs-Anbindung an einen Aufenthaltsraum.

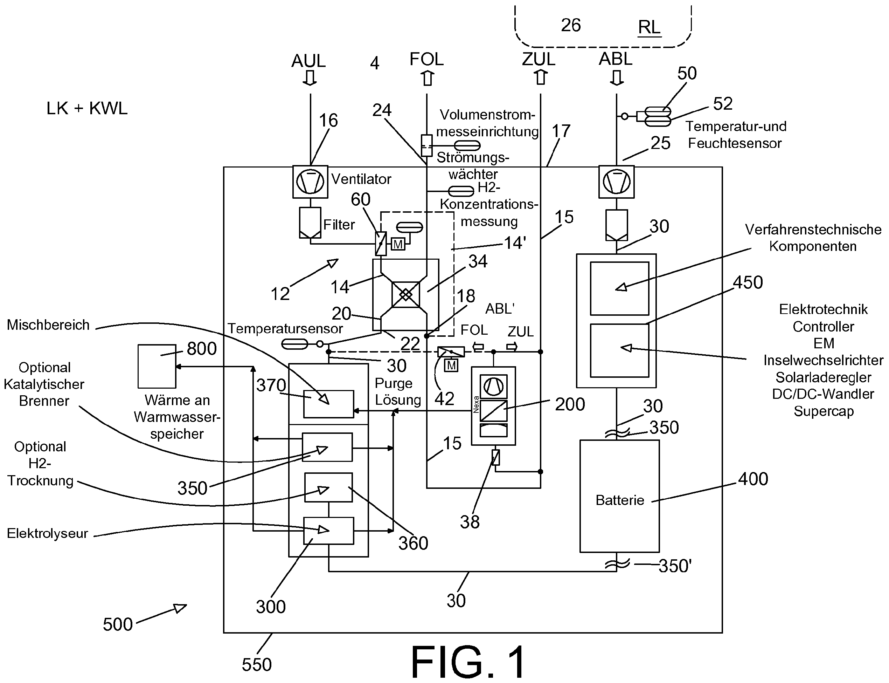

Eine in Fig. 1 gezeigte Hausenergiezentrale 500 weist ein Lüftungsgerät 12 auf, das einen ersten Luftstrang 14 von einem Außenluftanschluss 16 zu einem Zuluftanschluss 18 sowie einen zweiten Luftstrang 20 von einem Abluftanschluss 22 zu einem Fortluftanschluss 24 aufweist. Von diesen Anschlüssen stehen im Betrieb der Außenluftanschluss 16 und der Fortluftanschluss 24 mit der Umgebung U eines Aufenthaltsraumes 26 in Verbindung, nicht der Aufenthaltsraum 26 selbst. Der Zuluftanschluss 18 steht sowohl direkt über einen Zuluftstrang 15 als auch indirekt über eine Brennstoffzelleneinheit 200 mit dem Aufenthaltsraum 26 in Verbindung. Der Abluftanschluss 22 ist über einen Abluftstrang 30 mit dem Aufenthaltsraum 26 verbunden.

Die Hausenergiezentrale 500 weist zusätzlich eine Elektrolyseeinheit 300 auf, die so in dem Abluftstrang 30 der Hausenergiezentrale 500 eingebunden ist, dass die aus dem Aufenthaltsraum 26 stammende Abluft ABL als Kühl- und Spül-Volumenstrom über die Elektrolyseeinheit 300 geführt, bevor sie zum zweiten Luftstrang 20 des Lüftungsgerätes 12 strömen kann.

Der Elektrolyseeinheit 300 optional nachgeschaltet sind ein Wasserstoff-Trockner 360 und/oder ein katalytischer Brenner 350. Der optionale Katalytische Brenner 350 dient der katalytischen Verbrennung von Wasserstoff aus einem Wasserstofftank (nicht gezeigt) und damit zur Bereitstellung thermischer Energie zur Warmwasser und Heizenergiebereitstellung. Der katalytische Brenner 350 ist so in den Abluftstrang 30 der Hausenergiezentrale 500 eingebunden, dass die für die H2-Verbrennung benötigte Prozessluft aus dem Kühl- und Spül-Volumenstrom entnommen wird, dass die aus dem Aufenthaltsraum 26 stammende Abluft ABL als Kühl- und Spül-Volumenstrom über den katalytischen Brenner 350 geführt wird und dass die Prozessluft nach der Verbrennung, bevorzugt in der Mischzone 370, wieder dem Kühl- und Spül-Volumenstrom zugeführt wird. Dem katalytischen Brenner 350 im Abluftstrang 30 nachgeschaltet ist eine Mischzone 370, in welcher ein von der Brennstoffzelleneinheit 200 und/oder der Elektrolyseeinheit 300 stammendes wasserstoffhaltiges Purge-Gas dem Kühl- und Spül-Volumenstrom zugemischt und im Abluftstrang 30 als Fortluft FOL aus der Hausenergiezentrale ausgetragen werden kann. Ein Purge-Gas kann beispielsweise mittels einer (nicht gezeigten) Purgeanordung zum Spülen der Brennstoffzelleneinheit 200 auf ihrer Anodenseite und der Elektrolyseeinheit 300 auf ihrer Kathodenseite erhalten werden.

Im unteren Bereich der Hausenergiezentrale 500 der Fig. 1 ist ein Speicherbatterie-Abluftanschluss 350 erkennbar, über den eine der Hausenergiezentrale 500 zugeordnete und vorliegend umfasste Speicherbatterie 400 in den Abluftstrang 30 der Hausenergiezentrale 500 eingebunden ist. Die aus dem Aufenthaltsraum 26 stammende Abluft ABL wird somit ebenfalls über die Speicherbatterie 400 geführt. Somit können neben der Abwärme der Speicherbatterie 400 auch unerwünschte Ausgasungen, insbesondere auch H2, welcher bei Überladung der Speicherbatterieeinheit entsteht, der Speicherbatterie 400 abgeführt werden.

Wie ebenfalls aus Fig. 1 ersichtlich ist, weist die Hausenergiezentrale 500 leistungselektronische Komponenten 450 auf, die ebenfalls in den Abluftstrang 30 der Hausenergiezentrale 500 eingebunden ist. Somit wird die aus dem Aufenthaltsraum 26 stammende Abluft ABL auch über die leistungselektronische Komponenten 450 geführt. Über die leistungselektronischen Komponenten 450 kann die Speicherbatterie 400 beispielsweise durch einen Solarstrom einer (nicht gezeigten) Photovoltaikanlage geladen, der Haushalt mit 230 VAC versorgt werden und/oder die Brennstoffzelleneinheit und/oder der Elektrolyseeinheit an den 48 VDC-Knoten, mit welchem auch die Speicherbatterieeinheit 400 verbunden ist, angekoppelt werden. Optional und hier nicht eingezeichnet kann hier auch ein Ultrakurzzeitspeicher (Supercap) integriert werden, welcher ebenfalls mit dem 48 VDC-Knoten verbunden ist.

Das Lüftungsgerät 12, die Brennstoffzelleneinheit 200, die Elektrolyseeinheit 300, die leistungselektronische Komponenten Solarladeregler 450, die Speicherbatterie 400, der katalytische Brenner 350 und der Wasserstoff-Trockner 360 sind vorliegend in einem gemeinsamen Gehäuse 550 untergebracht, wodurch die Hausenergiezentrale 500 besonders kompakt ist.

Sowohl der erste Lüftungsstrang 14 des Lüftungsgerätes 12 als auch der zweite Lüftungsstrang 20 des Lüftungsgerätes 12 sind über einen Wärmetauscher 34 des Lüftungsgerätes 12 geführt, so dass ein Wärmeaustausch zwischen den über die beiden Luftstränge 14 und 20 geführten Luftströmen stattfindet. Im Winter kann beispielsweise über den zweiten Luftstrang 20 geführte Abluft ABL ihre Wärme an über den ersten Luftstrang 14 geführte Außenluft AUL übertragen, so dass wenigstens ein Teil der ansonsten mit der Fortluft FOL abgeführten Wärmeenergie der Raumluft RL wiedergewonnen und dem Aufenthaltsraum 26 zurückgeführt werden kann.

Am Lüftungsgerät 12 ist weiterhin ein Außenluftbypass 14' mit einer Bypassklappe 60 vorgesehen um den Wärmetauscher 34 des Lüftungsgerätes 12 bedarfsweise zu überbrücken. Diese Bypassklappe 60 kann so angesteuert werden, dass über den Außenluftanschluss 16 zuströmende Außenluft AUL direkt in den Zuluftstrang 15 strömt.

Die Brennstoffzelleneinheit 200 ist eingangsseitig über einen Teil des Zuluftstrangs 15 mit dem Zuluftanschluss 18 des Lüftungsgerätes 12 verbunden und wird so mit frischer und optional vorgewärmter Zuluft ZUL versorgt, die gleichzeitig sowohl für die Reaktion mit dem Wasserstoff in der Brennstoffzelleneinheit der Brennstoffzelleneinheit 200 benötigt wird als auch als Kühlluft zum Abführen der bei der Reaktion entstehenden Wärme. Die Brennstoffzelleneinheit der Brennstoffzelleneinheit 200 besitzt Proton-Exchange-Membranen (PEM Membranen) der der Reaktionsluftstrom und Kühlluftstrom nicht separat, sondern in einem Luftstrom zugeführt werden. Dieser Luftstrom durch die Brennstoffzelleneinheit 200 nimmt in Folge der Reaktion in der Brennstoffzelleneinheit entstehendes Wasser auf und wird somit befeuchtet. Der aus der Brennstoffzelleneinheit 200 austretende, warme und feuchte Luftstrom wird jeweils ganz oder teilweise dem Zuluftstrang 200 und/oder dem Abluftstrang 30 zugeführt.

Wenn die aus dem Lüftungsgerät 12 austretende Zuluft ZUL kühler und trockener ist, als die gewünschte Raumluft RL, wenn ihr also Wärme und Feuchtigkeit zugeführt werden muss, wird dieser Zuluft ZUL ein Teil oder die ganze aus der Brennstoffzelleneinheit 200 austretenden Luft zugeführt. Hierzu ist der Ausgang der Brennstoffzelleneinheit 200 über einen ersten Brennstoffzellenausgangsstrang 36 mit dem Zuluftstrang 15 verbunden. Eingangsseitig ist der Brennstoffzelleneinheit 200 eine Rückschlagklappe 38 vorgeschaltet.

Wenn hingegen die aus dem Lüftungsgerät 14 austretende Zuluft ZUL 18 bereits warm oder feucht genug ist, wird die aus der Brennstoffzelleneinheit 200 austretende Luft über einen zweiten Brennstoffzellenaustrittsstrang 40 gesteuert über eine in diesem angeordnete Lüftungsklappe 42 als Abluft ABL' dem Abluftstrang 30 zugeführt und somit zum Lüftungsgerät 12 zurückgeführt.

Dies hat den Vorteil, dass die mit dem aus der Brennstoffzelleneinheit 200 austretende Luft abgeführte Reaktionswärme mit dem Abluftstrom durch den Wärmetauscher 34 des Lüftungsgerätes 12 geführt wird, so dass auch diese Wärmeenergie dem Abluftstrom wenigstens teilweise wieder entzogen und dem Zuluftstrom zugeführt werden kann.

Vorliegend ist der aus der Brennstoffzelleneinheit 200 austretende und dem zweiten Luftstrang 20 des Lüftungsgerätes 12 als Abluft ABL` zuführbare Luftstrom so geführt, dass er sich erst mit der aus einem jeweiligen Aufenthaltsraum 26 stammende Abluft ABL mischt, nach dem diese die Elektrolyseeinheit 300 durchströmt hat.

Aufgrund der Rückschlagklappe 38 kann über die steuerbare Lüftungsklappe 42 ebenfalls eingestellt werden, wie viel der aus dem Lüftungsgerät 12 austretenden Zuluft ZUL direkt dem Aufenthaltsraum 26 zugeführt und wie viel der Luft der Brennstoffzelleneinheit 200 und somit gegebenenfalls indirekt der Raumluft RL im Aufenthaltsraum 26 zugeführt wird.

Bei der soeben beschriebenen wärmegeführten Betriebsweise erfolgt die Steuerung der Hausenergiezentrale 500 und insbesondere der Lüftungsklappe 42 geführt durch die Lufttemperatur und die Luftfeuchtigkeit im Aufenthaltsraum 26. Für die Steuerung sind am Abluftanschluss 25 ein Luftfeuchtesensor 50 und ein Lufttemperatursensor 52 angeordnet.

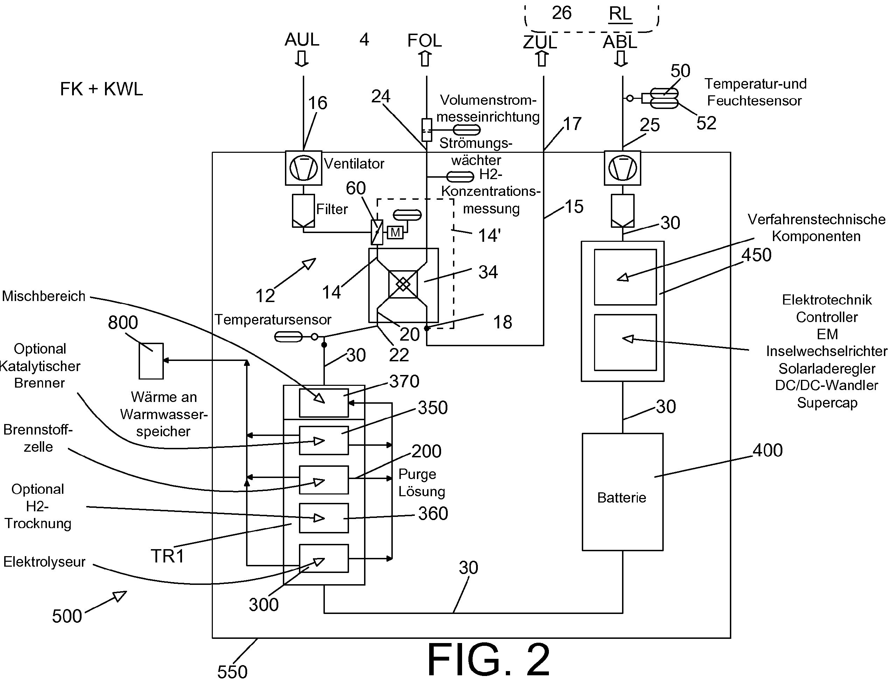

Die Ausführung der Hausenergiezentrale 500 in Fig. 2 zeigt die Einbindung einer flüssiggekühlten Brennstoffzelleneinheit 200. Hierbei wird die Hauptwärme der Brennstoffzelleneinheit 200 über einen Kühlkreislauf an einen Warmwasserspeicher 800 abgegeben. Die Brennstoffzelleneinheit 200 kann in den gleichen Teilraum TR1 integriert werden, in welchen auch der Elektrolyseeinheit 300 integriert ist. Anstelle der Vorrichtungen für die optionale direkte Einkopplung der Brennstoffzellen-Kühlluft in die Zuluft der Wohnräume steht in dieser Ausführung die Nutzung eines Teils des Kühl- und Spül-Volumenstroms als Brennstoffzellen-Reaktionsluft in der Brennstoffzellen-Kathode und die anschließende Vermischung der feuchten und erwärmten Abluft aus der Brennstoffzellen-Kathode mit dem Kühl- und Spül-Volumenstrom. Wärme und Feuchte aus der Brennstoffzelleneinheit 200 können damit über den Kühl- und Spül-Volumenstrom und über den Gas/Gas-Wärmetauscher 12 in die Zuluft ZUL abgegeben werden.

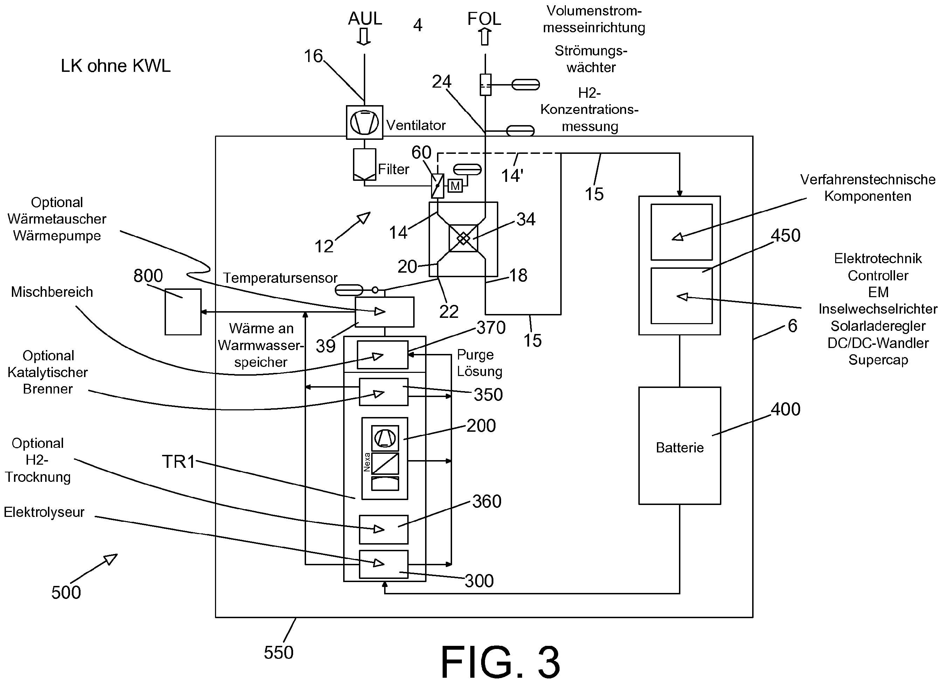

Fig. 3 zeigt ein Ausführungsbeispiel der Hausenergiezentrale 500 ohne Anbindung an eine KWL, wie es bei Integration in bestehende Wohnanlagen oft anzufinden ist, da dort zentrale KWL-Anlagen oft nicht nachgerüstet werden sollen. Die Hausenergiezentrale 500 bezieht hier Außenluft AUL über ein Gebläse und einen Filter als Teil des Lüftungsgeräts 12 und erwärmt diese Außenluft AUL optional über einen Gas/Gas-Wärmetauscher 34 und stellt damit den Kühl- und Spül-Volumenstrom für die Hausenergiezentrale 5000 bereit. Dieser Kühl- und Spül-Volumenstrom und damit auch die lüftungstechnischen Komponenten innerhalb des Gehäuses, insbesondere auch der Lüfter, die Strömungskanäle und der Gas/Gas-Wärmetauscher 34, können deutlich kleiner ausgeführt werden als bei den Ausführungsbeispielen der Fig.1 und Fig.2, bei welchen bevorzugt die gesamte Abluft ABL des Aufenthaltsraums 26 verwendet wird, und richtet sich bzgl. seiner Dimensionierung alleine nach den Erfordernissen der Sicherheits/Wärme- und Verfahrenstechnik der Hausenergiezentrale 500. Ein Vorteil dieser Ausführung ist auch die kompaktere Bauweise bei Vorhandensein und Durchleiten von nur einem Volumenstrom durch das Gehäuse 550.

Die luftgekühlte Brennstoffzelleneinheit 200 entnimmt dem Kühl- und Spül-Volumenstrom mindestens eine Teilmenge für die elektrochemische Reaktion mit dem Wasserstoff und für die Kühlung der Brennstoffzelleneinheit 200. Dieser Luftstrom durch die Brennstoffzelleneinheit 200 nimmt in Folge der Reaktion in der Brennstoffzelleneinheit 200 entstehendes Wasser und Wärme auf und wird somit befeuchtet. Der aus der Brennstoffzelleneinheit 200 austretende, warme und feuchte Luftstrom wird mit dem nicht benutzten Teil des Kühl- und Spül-Volumenstroms vermischt und durchströmt die weiteren Anlagenteile zur Verdünnung der austretenden Gase und zur Aufnahme von Wärme. Die von allen Komponenten innerhalb des Gehäuses an den Kühl- und Spül-Volumenstrom abgegebene Wärme kann über den optionalen Wärmetauscher 39, welcher direkt oder über eine Wärmepumpe an den Warmwasserspeicher 800 gekoppelt sein kann, an den Warmwasserspeicher 800 abgegeben werden.

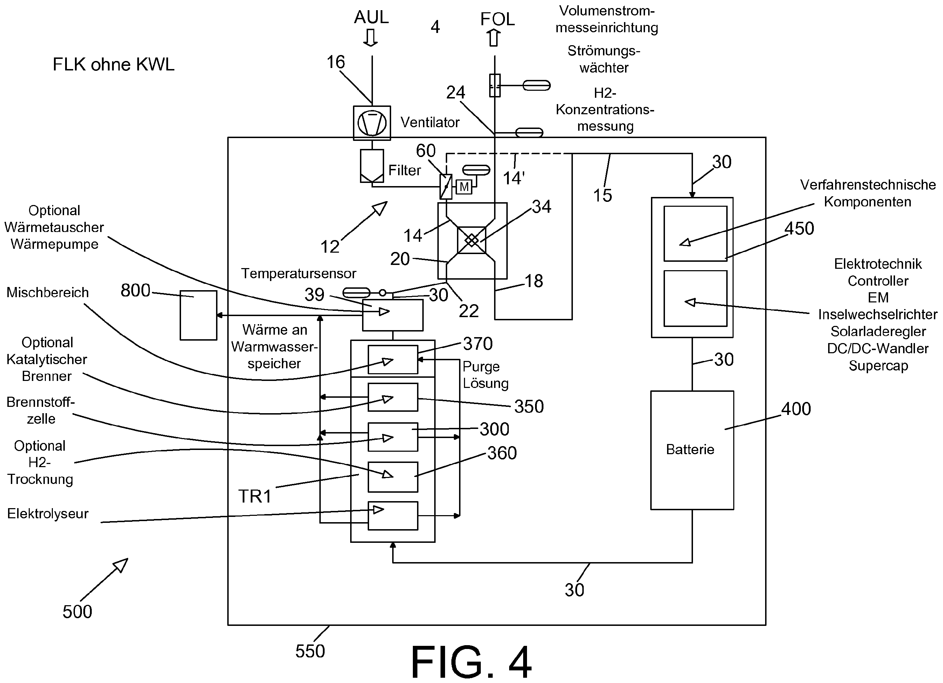

Fig. 4 zeigt ein Ausführungsbeispiel der Hausenergiezentrale 500, ähnlich der von Fig.3, bei welcher keine Anbindung an eine KWL besteht und bei der eine flüssiggekühlte Brennstoffzelleneinheit 200 integriert ist. Hierbei wird die Hauptwärme der Brennstoffzelleneinheit 200 über einen Kühlkreislauf an den Wärmespeicher (nicht gezeigt) abgegeben. Die Brennstoffzelleneinheit 200 kann in den gleichen Teilraum TR1 integriert werden, in welchen auch der Elektrolyseeinheit 300 integriert ist. Ein kleinerer Teil des Kühl- und Spül-Volumenstroms wird als Brennstoffzellen-Reaktionsluft in die Brennstoffzellen-Kathode gefördert und die feuchte und erwärmte Kathoden-Abluft mit dem Kühl- und Spül-Volumenstrom vermischt. Die von allen Komponenten innerhalb des Gehäuses 550 an den Kühl- und Spül-Volumenstrom abgegebene Wärme kann auch hier über den optionalen Wärmetauscher, welcher direkt oder über eine Wärmepumpe an den Warmwasserspeicher 800 gekoppelt sein kann, an den Warmwasserspeicher 800 abgegeben werden.

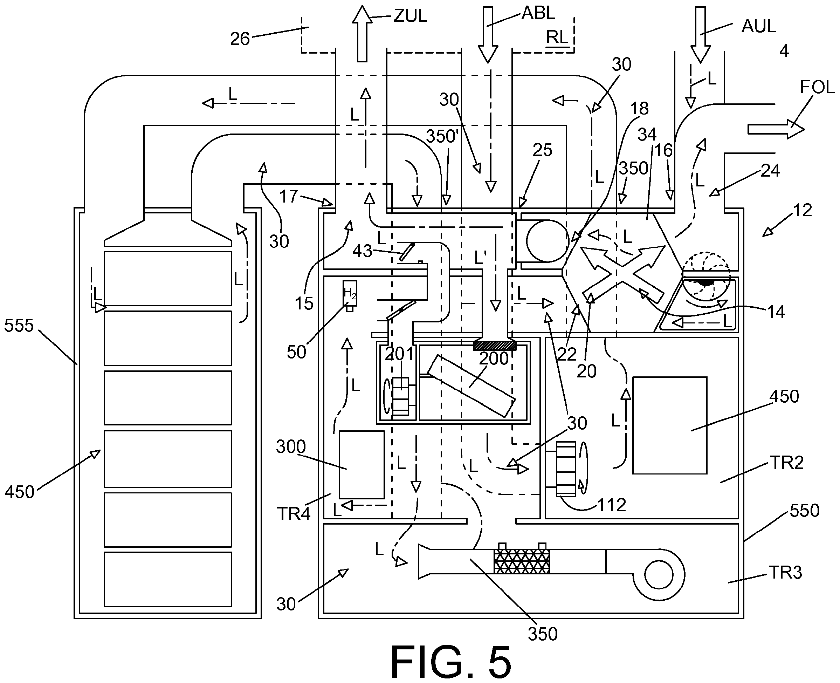

Eine Hausenergiezentrale 500 in Fig. 5 dient der autarken Energieversorgung eines mit einer KWL ausgestatteten Wohnhauses mit Strom und/oder Wärme. Die Hausenergiezentrale 500 in Fig. 5 weist ein Gehäuse 550 auf, das einen Außenluftanschluss 16 und einen Fortluftanschluss 24 aufweist. Ferner vorgesehen ist ein Lüftungsgerät 12 aufweisend einen Wärmetauscher 34. Das Lüftungsgerät 12 ist derart mit dem Außenluftanschluss 16 verbunden, dass Außenluft AUL in einem ersten Luftstrang 14 über den Wärmetauscher 34, in einen Zuluftstrang 15 der Hausenergiezentrale 500 strömen kann. Der Zuluftstrang 15 verläuft zumindest teilweise innerhalb des Gehäuse 550 verläuft.

Die Hausenergiezentrale 500 weist einen Zuluftanschluss 17 und einen Abluftanschluss 25 zum Verbinden der Hausenergiezentrale 500 mit wenigstens einem zentral zu lüftenden Aufenthaltsraum 26 auf, derart, dass ein in den Zuluftstrang 15 der Hausenergiezentrale 500 strömender Luftstrom zunächst dem Aufenthaltsraum 26 als Zuluft ZUL zugeführt werden kann. Hausenergiezentrale 500 in Fig. 5 weist ebenfalls einen Abluftstrang 30 auf, in dem ein durch das Lüftungsgerät 12 bewirkter Luft-Volumenstrom, innerhalb des Gehäuses 50 weitergeführt werden kann. Aus dem Aufenthaltsraum 26 stammende Abluft ABL wird in dem Abluftstrang 30 der Hausenergiezentrale 500 weitergeführt werden kann.

Hausenergiezentrale 500 in Fig. 5 weist weiter eine Brennstoffzelleneinheit 200 auf, die innerhalb des Gehäuses 550 angeordnet und derart in den Abluftstrang 30 eingebunden ist, dass unerwünschtes in der Brennstoffzelleneinheit 200 freiwerdendes Gas durch den Luft-Volumenstrom verdünnt und zusammen mit Abwärme aus der Brennstoffzelleneinheit 200 ausgetragen werden kann. Ebenfalls Teil der Hausenergiezentrale 500 ist eine Speicher-Batterieeinheit 450, die in einem externen Gehäuses 555 angeordnet ist und derart in den Abluftstrang 30 eingebunden ist, dass unerwünschtes in der Speicher-Batterieeinheit 450 freiwerdendes Gas durch den Luft-Volumenstrom verdünnt und zusammen mit Abwärme aus der Speicher-Batterieeinheit 450 ausgetragen werden kann.

Hausenergiezentrale 500 in Fig. 5 ist ausgestattet mit einem zweitem Luftstrang 20, der mit dem Abluftstrang 30 verbunden ist, wobei der zweite Luftstrang 20 des Lüftungsgerätes 12 über den Wärmetauscher 34 des Lüftungsgerätes 12 mit dem ersten Luftstrang 14 wärmegekoppelt ist, so dass über den zweiten Luftstrang 20 nach außen geführte Abluft ABL wenigstens einen Teil der in ihr enthaltenen Wärmeenergie über den Wärmetauscher 34 des Lüftungsgerätes 12 an den ersten Luftstrang 14 abgeben werden kann und gleichzeitig die unerwünschten durch den Luft-Volumenstrom verdünnten Gase mit dem Luft-Volumenstrom über den Außenluftanschluss 16 ausgetragen werden können, so dass die Bildung explosiver Gasgemische in der Hausenergiezentrale vermieden wird und diese sicher betreibbar ist.

Im Folgenden wird mit Bezug auf Fig. 5 der Verlauf eines Luft-Volumenstrom L (Strich-Punkt-Linie), der im Rahmen dieser Anmeldung auch als Kühl- und Spül-Volumenstrom bezeichnet wird, durch die Hausenergiezentrale 500 erläutert. Die Fig. 5 zeigt ähnlich des Ausführungsbeispiels der Fig. 1 eine Hausenergiezentrale 500 mit ausschließlich luftgekühlter Brennstoffzelleneinheit 200 und angeschlossen an einen Aufenthaltsraum 26 zwecks kontrollierter Wohnraumlüftung.

Zunächst tritt Außenluft AUL aus der Umgebung U als Luft-Volumenstrom L über den Außenluftanschluss 16 des Gehäuses 550 in die Hausenergiezentrale 500. Bewirkt wird dies durch ein Gebläse des Lüftungsgeräts 12. Im weiteren Verlauf strömt der Luft-Volumenstrom L über den ersten Luftstrang 14 über den Wärmetauscher 34 in den Zuluftstrang 15 und von dort über den Zuluftanschluss 17 in den Aufenthaltsraum 26. Ein Anteil L' des Luft-Volumenstrom L wird parallel strömend der Brennstoffzelleneinheit 200 zugeführt (in Fig. 5 beispielhaft nach unten) Dieser Anteil L' wird durch ein Gebläse 201 der Brennstoffzelleneinheit 200 angesogen. Nach dem Vorbeiströmen an der Brennstoffzelleneinheit 200 mischt sich der Anteil L' (als indirekte Zuluft) über die leicht geöffnete Steuerklappe 43 mit dem Luft-Volumenstrom L, der von dort über den Zuluftanschluss 17 in den Aufenthaltsraum 26 strömt.

Im weiteren Verlauf strömt der Luft-Volumenstrom L (als Abluft ABL) über den Abluftanschluss 25 in den Abluftstrang 30 der Hausenergiezentrale 500 und im weiteren Verlauf (in Fig. 5 beispielhaft nach unten) hin zu einem Zusatzgebläse 112. Das Zusatzgebläse 112 und eine Leistungselektronik 450 sind in einem Teilraum TR2 angeordnet.

Von dort strömt der Luft-Volumenstrom L über den Abluftstrang 30 zum Abluftanschluss 350, über den die der Hausenergiezentrale 500 zugeordnete und vorliegend in dem externen Gehäuse angeordnete Speicherbatterie 400 in den Abluftstrang 30 der Hausenergiezentrale 500 eingebunden ist. Im weiteren Verlauf, d.h. nach Aufnahme eines unerwünschtes in der Speicher-Batterieeinheit 450 freiwerdendes Gases sowie von Abwärme aus der Speicher-Batterieeinheit 450, strömt der Luft-Volumenstrom L über den Abluftanschluss 350' in das Gehäuse 550 zurück.

Von dort strömt der Luft-Volumenstrom L zu dem katalytischer Brenner 350 im Teilraum TR3 (in Fig. 5 beispielhaft ganz unten) und weiteren Verlauf zur Elektrolyseeinheit 300 in Teilraum TR4. Demnach werden die Teilräume TR2, TR3, TR4 seriell durchströmt. Schließlich strömt der Luft-Volumenstrom L an einem Wasserstoffsensor 59 vorbei und von dort in den zweiten Luftstrang 20 und durch den Wärmetauscher 35 zum Fortluftanschluss 24, um durch diesen als Fortluft zur Umgebung U zu gelangen.

## Patentansprüche

1. Hausenergiezentrale (500), insbesondere zur autarken Energieversorgung eines Wohnhauses mit Strom und/oder Wärme, mit
- einem Gehäuse (550), das einen Außenluftanschluss (16) und einen Fortluftanschluss (24) aufweist,
- einem Lüftungsgerät (12) aufweisend einen Wärmetauscher (34), wobei das Lüftungsgerät (12) derart mit dem Außenluftanschluss (16) verbunden ist, dass Außenluft (AUL) in einem ersten Luftstrang (14) über den Wärmetauscher (34), oder über einen Außenluftbypass (14`) an dem Wärmetauscher (34) vorbei, in einen Zuluftstrang (15) der Hausenergiezentrale (500) strömen kann, wobei der Zuluftstrang (15) zumindest teilweise innerhalb des Gehäuse (550) verläuft,
- einem Abluftstrang (30), in dem ein durch das Lüftungsgerät (12) bewirkter Luft-Volumenstrom, innerhalb des Gehäuses (550) weitergeführt werden kann,
- einer Brennstoffzelleneinheit (200), die bevorzugt innerhalb des Gehäuses (550) angeordnet und derart in den Abluftstrang (30) eingebunden ist, dass unerwünschtes in der Brennstoffzelleneinheit (200) freiwerdendes Gas durch den Abluft-Volumenstrom verdünnt und zusammen mit Abwärme aus der Brennstoffzelleneinheit (200) ausgetragen werden kann,
- einer Speicher-Batterieeinheit (450), die bevorzugt innerhalb des Gehäuses (550) angeordnet ist und derart in den Abluftstrang (30) eingebunden ist, dass unerwünschtes in der Speicher-Batterieeinheit (450) freiwerdendes Gas durch den Luft-Volumenstrom verdünnt und zusammen mit Abwärme aus der Speicher-Batterieeinheit (450) ausgetragen werden kann,
- einem zweitem Luftstrang (20), der mit dem Abluftstrang (30) verbunden ist, wobei der zweite Luftstrang (20) des Lüftungsgerätes (12) über den Wärmetauscher (34) des Lüftungsgerätes (12) mit dem ersten Luftstrang (14) wärmegekoppelt ist, so dass über den zweiten Luftstrang (20) nach außen geführte Abluft (ABL) bedarfsweise wenigstens einen Teil der in ihr enthaltenen Wärmeenergie über den Wärmetauscher (34) des Lüftungsgerätes (12) an den ersten Luftstrang (14) abgeben werden kann und gleichzeitig die unerwünschten durch den Luft-Volumenstrom verdünnten Gase mit dem Luft-Volumenstrom über den Fortluftanschluss (24) ausgetragen werden können, so dass die Bildung explosiver Gasgemische in der Hausenergiezentrale vermieden wird und diese sicher betreibbar ist.

2. Hausenergiezentrale (500) nach Anspruch 1, mit einem Zuluftanschluss (17) und einem Abluftanschluss (25) zum Verbinden der Hausenergiezentrale (500) mit wenigstens einem zentral zu lüftenden Aufenthaltsraum (26) derart, dass ein in den Zuluftstrang (15) der Hausenergiezentrale (500) strömender Luftstrom zunächst dem Aufenthaltsraum (26) als Zuluft (ZUL) zugeführt werden kann und aus dem Aufenthaltsraum (26) stammende Abluft (ABL) in dem Abluftstrang (30) der Hausenergiezentrale (500) weitergeführt werden kann.

3. Hausenergiezentrale (500) nach Anspruch 1 oder 2, wobei das Gehäuse mehrere voneinander getrennte Teilräume aufweist, die über den Abluftstrang (30) miteinander gekoppelt sind.

4. Hausenergiezentrale nach einem der vorangehenden Ansprüche, mit einer Elektrolyseeinheit (300), die innerhalb des Gehäuses (550) angeordnet und derart in den Abluftstrang (30) eingebunden ist, dass unerwünschtes in der Elektrolyseeinheit (300) freiwerdendes Gas durch den Luft-Volumenstrom verdünnt und zusammen mit Abwärme aus der Elektrolyseeinheit (300) ausgetragen werden kann.

5. Hausenergiezentrale nach einem der vorangehenden Ansprüche, **dadurch gekennzeichnet, dass** der aus der Brennstoffzelleneinheit (200) austretende und dem zweiten Luftstrang (20) des Lüftungsgerätes (12) als Abluft (ABL`) zuführbare Luftstrom derart geführt ist, dass er sich erst mit der aus einem jeweiligen Aufenthaltsraum (26) stammende Abluft (ABL) mischt nach dem diese die Elektrolyseeinheit (300) durchströmt hat.

6. Hausenergiezentrale nach einem der vorangehenden Ansprüche, mit einem der Elektrolyseeinheit (300) nachgeschalteten katalytischen Brenner.

7. Hausenergiezentrale nach einem der vorangehenden Ansprüche, mit einem Solarladereger, Inselwechselrichter und/oder DC/DC-Wandler, der in den Abluftstrang (30) eingebunden ist.

8. Hausenergiezentrale nach einem der vorangehenden Ansprüche, wobei die Brennstoffzelleneinheit flüssigkeitsgekühlt ist und wenigstens zeitweise mit einem Warmwasserspeicher der Hausenergiezentrale wärmegekoppelt ist.

9. Hausenergiezentrale nach einem der vorangehenden Ansprüche, mit einem Mischbereich der wenigstens zeitweise mit der Brennstoffzelleneinheit (200) derart fluidverbunden ist, dass der Mischbereich ein aus der Brennstoffzelleneinheit (200) austretendes Spülgas aufnehmen kann, wobei der Mischbereich so mit dem Lüftungsgerät (12) verbunden ist, so dass ein aus dem Mischbereich austretender Luftstrom als Abluft (ABL) dem zweiten Luftstrang (20) des Lüftungsgerätes (12) zugeführt werden kann.

10. Hausenergiezentrale nach einem der vorangehenden Ansprüche, wobei die Brennstoffzelleneinheit (200) so mit dem Lüftungsgerät (12) verbunden ist, dass ein in den Zuluftstrang (15) der Hausenergiezentrale (500) strömender Luftstrom auch als indirekte Zuluft zunächst der Brennstoffzelleneinheit (200) und über diese gegebenenfalls indirekt dem jeweiligen Aufenthaltsraum (26) zuführbar ist.

11. Hausenergiezentrale nach einem der vorangehenden Ansprüche, wobei die Brennstoffzelleneinheit (200) so mit dem Lüftungsgerät (12) und einem jeweiligen Aufenthaltsraum (26) verbunden ist, dass ein aus der Brennstoffzelleneinheit (200) austretender Luftstrom einerseits als Zuluft (ZUL) einem jeweiligen Aufenthaltsraum (26) zugeführt werden kann und/oder andererseits als Abluft (ABL') zusammen mit aus einem jeweiligen Aufenthaltsraum (26) stammender Abluft (ABL) dem zweiten Luftstrang (20) des Lüftungsgerätes (12) zugeführt werden kann.

12. Verfahren zum Betreiben einer Hausenergiezentrale (500), insbesondere einer Hausenergiezentrale (500) nach einem der vorangehenden Ansprüche, aufweisend die Schritte:
- Führen von Außenluft (AUL) in einem ersten Luftstrang (14) über einen Wärmetauscher (34), oder über einen Außenluftbypass (14') an dem Wärmetauscher (34) vorbei, in einen Zuluftstrang (15) der Hausenergiezentrale (500),
- Weiterführen eines durch das Lüftungsgerät (12) bewirkten Luft-Volumenstroms in einem Abluftstrang (30) der Hausenergiezentrale (500), der zumindest abschnittsweise innerhalb eines Gehäuses (550) der Hausenergiezentrale (500) verläuft,
- Verdünnen von unerwünschtem in der Brennstoffzelleneinheit (200) freiwerdenden Gases durch den Abluft-Volumenstrom und Austragen des verdünnten Gases zusammen mit Abwärme aus der Brennstoffzelleneinheit (200),
- Verdünnen von unerwünschtem in der Speicher-Batterieeinheit (450) freiwer denden Gases durch den Luft-Volumenstrom und Austragen des verdünnten Gases zusammen mit Abwärme aus der der Speicher-Batterieeinheit (450),
- Führen von Abluft (ABL) über einen zweitem Luftstrang (20), der mit dem Abluftstrang (30) verbunden ist, wobei der zweite Luftstrang (20) des Lüftungsgerätes (12) über den Wärmetauscher (34) des Lüftungsgerätes (12) mit dem ersten Luftstrang (14) wärmegekoppelt ist, so dass über den zweiten Luftstrang (20) nach außen geführte Abluft bedarfsweise wenigstens einen Teil der in ihr enthaltenen Wärmeenergie über den Wärmetauscher (34) des Lüftungsgerätes (12) an den ersten Luftstrang (14) abgeben kann und gleichzeitig die unerwünschten durch den Luft-Volumenstrom verdünnten Gase mit dem Luft-Volumenstrom über den Fortluftanschluss (24) ausgetragen werden können, so dass die Bildung explosiver Gasgemische in der Hausenergiezentrale vermieden wird und diese sicher betreibbar ist.

13. Verfahren nach Anspruch 12, aufweisend den Schritt:
- Führen von außerhalb eines Aufenthaltsraums stammender Außenluft als direkte Zuluft zu einem Aufenthaltsraum oder als indirekte Zuluft zunächst über einen Gas-Gas-Wärmetauscher, welcher Wärme und ggf. Feuchte aus der Fortluft an die Zuluft überträgt und/oder über eine Brennstoffzelleneinheit und danach zu dem Aufenthaltsraum.

14. Verfahren nach Anspruch 12 oder 13, aufweisend den Schritt:
- Führen von aus dem Aufenthaltsraum stammender Abluft als Kühl- und Spül-Volumenstrom zur Spülung und Wärmeaufnahme über die Komponenten der Hausenergiezentrale und optional über einen Luft-Luft-Wärmetauscher zur Übertragung von Wärme und ggf. Feuchte an die Zuluft, insbesondere vor einem Austragen selbiger als Fortluft aus der Hausenergiezentrale.

15. Verfahren nach Anspruch 12, aufweisend den Schritt:
- Führen von außerhalb eines Aufenthaltsraums stammender Außenluft als direkte Zuluft zum Hausenergiesystem zunächst über einen Gas-Gas-Wärmetauscher zum Vorwärmen oder optional bei hohen Außentemperaturen im Bypass dazu und Verwendung als Kühl- und Spül-Volumenstrom zur Verdünnung und zum Abtransport brennbarer Gase sowie zur Wärmeaufnahme über die Komponenten der Hausenergiezentrale.

## Claims

1. A domestic power plant (500), in particular for the self-sufficient energy provision of a residential building equipped with electricity and /or heat, comprising
- a housing (550) comprising an external air connection (16) and an exhaust air connection (24),
- a ventilation device (12) comprising a heat exchanger (34), wherein the ventilation device (12) is connected to the external air connection (16) such that the outdoor air (AUL) can flow in a first air tract (14) via the heat exchanger (34), or via an outdoor air bypass (14') past the heat exchanger (34), into a supply air tract (15) of the domestic power plant (500), wherein the supply air tract (15) runs at least partially within the housing (550),
- an extract air tract (30), in which an air volume flow brought about by the ventilation device (12) can propagated within the housing (550),
- a fuel cell unit (200), which is arranged within the housing (550) and integrated into the extract air tract (30) such that undesired gas released in the fuel cell unit (200) can be diluted by the extract air volume flow and be removed together with waste heat from the fuel cell unit (200),
- a storage battery unit (450) which is preferably arranged within the housing (550) and integrated into the extract air tract (30) such that undesired gas released in the storage battery unit (450) can be diluted by the air volume flow and be removed together with waste heat from the storage battery unit (450),
- a second air tract (20) which is connected to the extract air tract (30), wherein the second air tract (20) of the ventilation device (12) is thermally coupled to the first air tract (14) via the heat exchanger (34) of the ventilation device (12) such that it is possible for extract air via the second air tract (20) to give off, as required and via the heat exchanger (34) of the ventilation device (12), at least part of the thermal energy contained therein to the first air tract (14), and simultaneously the undesired gases diluted by the air volume flow can be expelled together with the air volume flow via the exhaust air connection (24), so that the formation of explosive gas mixtures in the domestic power plant is avoided and the domestic power plant can be operated safely.

2. A domestic power plant (500) pursuant to claim 1, comprising a supply air connection (17) and an extract air connection (25) for connecting the domestic power plant (500) to at least one living space (26) to be centrally ventilated such that an airflow flowing into the supply air tract (15) of the domestic power plant (500) can first of all be fed into the living space (26) as supply air (ZUL) and that extract air (ABL) from the living space (26) can be propagated in the extract air tract (30) of the domestic power plant (500).

3. A domestic power plant (500) pursuant to claim 1 or 2, wherein the housing comprises several separate subspaces coupled to each other via the extract air tract (30).

4. A domestic power plant pursuant to one of the previous claims, with an electrolysis unit (300) which is arranged within the housing (550) and integrated into the extract air tract (30) such that undesired gas released in the electrolysis unit (300) can be diluted by the air volume flow and removed together with waste heat of the electrolysis unit (300).

5. A domestic power plant pursuant to one of the previous claims, **characterized in that** the air flow which exits the fuel cell unit (200) and may be fed as extract air (ABL') into the second air tract (20) of the ventilation device (12), is guided in such a way that it will mix with the extract air (ABL) from a respective living space (26) only after the latter has flown through the electrolysis unit (300).

6. A domestic power plant pursuant to one of the previous claims, with a catalytic combustor downstream of the electrolysis unit (300).

7. A domestic power plant pursuant to one of the previous claims, with a solar charge regulator, island inverter and/or DC/DC converter, which is integrated into the exhaust air tract (30).

8. A domestic power plant pursuant to one of the previous claims, wherein the fuel cell unit may be liquid-cooled and, at least intermittently, be thermally coupled to a hot water storage unit of the domestic power plant.

9. A domestic power plant pursuant to one of the previous claims, with a mixing region which is, at least intermittently, fluidly connected to the fuel cell unit (200) such that the mixing region can absorb a flushing gas exiting the fuel cell unit (200), wherein the mixing region is connected to the ventilation device (12) such that an airflow exiting the mixing region may be fed into the second air tract (20) of the ventilation device (12) as extract air (ABL).

10. A domestic power plant pursuant to one of the previous claims, wherein the fuel cell unit (200) is connected to the ventilation device (12) such that an airflow flowing into the supply air tract (15) of the domestic power plant (500) may also be fed as indirect supply air first of all into the fuel cell unit (200) and via the latter, if need be, indirectly into the respective living space (26).

11. A domestic power plant pursuant to one of the previous claims, wherein the fuel cell unit (200) is connected to the ventilation device (12) and a respective living space (26) such that an airflow exiting the fuel cell unit (200) may, on the one hand, be fed as supply air (ZUL) into a respective living space (26), and/or, on the other, be fed as extract air (ABL') into the second air tract (20) of the ventilation device (12) together with extract air (ABL) from a respective living space (26).

12. A method for operating a domestic power plant (500), in particular a domestic power plant (500) pursuant to one of the previous claims, comprising the steps of:
- guiding outdoor air (AUL) in a first air tract (14) via a heat exchanger (34), or via an outdoor air bypass (14'), past a heat exchanger (34), into a supply air tract (15) of the domestic power plant (500),
- propagating an air volume flow brought about by the ventilation device (12) in an extract air tract (30) of the domestic power plant (500), which runs at least partially within a housing (550) of the domestic power plant (500),
- diluting undesired gas released in the fuel cell unit (200) by means of the extract air volume flow and removing the diluted gas together with waste heat from the fuel cell unit (200),
- diluting undesired gas released in the storage battery unit (450) by means of the extract air volume flow and removing the diluted gas together with waste heat from the storage battery unit (450),
- guiding extract air (ABL) via a second air tract (20) which is connected to the extract air tract (30), wherein the second air tract (20) of the ventilation device (12) is thermally coupled to the first air tract (14) via the heat exchanger (34) of the ventilation device (12) such that it is possible for extract air expelled via the second air tract (20) to give off, as required and via the heat exchanger (34) of the ventilation device (12), at least part of the thermal energy contained therein to the first air tract (14), and simultaneously the undesired gases diluted by the air volume flow can be expelled together with the air volume flow via the exhaust air connection (24), so that the formation of explosive gas mixtures in the domestic power plant is avoided and the domestic power plant can be operated safely.

13. A method pursuant to claim 12, comprising the step of:
- guiding outdoor air from outside a living space as direct supply air into a living space or, as indirect supply air, first via a gas-gas heat exchanger, which transfers heat and, if need be, humidity from the exhaust air into the supply air, and/or via a fuel cell unit and then into the living space.

14. A method pursuant to claim 12 or 13, comprising the step of:
- guiding extract air from the living space as a cooling and flushing volume flow for flushing and heat absorption via the components of the domestic power plant and, optionally, via an air-air heat exchanger for transferring heat and, if need be, humidity, into the supply air, in particular, prior to a removal of said extract air as exhaust air from the domestic power plant.

15. A method pursuant to claim 12, comprising the step of:
- guiding outdoor air from outside a living space as direct supply air into the domestic power plant, first of all via a gas-gas heat exchanger for preheating or, optionally, in case of high outdoor temperatures, in a bypass past said gas-gas heat exchanger, and using said outdoor air as a cooling and flushing volume flow for diluting and removing flammable gases as well as for the absorption of heat via the components of the domestic power plant.

## Revendications

1. Centrale (500) d'énergie domestique, en particulier pour l'alimentation autonome en énergie d'une maison d'habitation en courant et/ou en chaleur, comprenant
- une enveloppe (550), qui a un raccord (16) pour de l'air extérieur et un raccord (24) pour de l'air d'échappement,
- un appareil (12) de ventilation comportant un échangeur de chaleur (34), dans lequel l'appareil (12) de ventilation communique avec le raccord (16) pour de l'air extérieur, de manière à ce que de l'air (AUL) extérieur en une première branche (14) pour de l'air puisse, en passant par l'échangeur (34) de chaleur ou en contournant l'échangeur (34) de chaleur par une dérivation (14') pour de l'air extérieur, aller dans une branche (15) pour de l'air d'apport de la centrale (500) d'énergie domestique, dans laquelle la branche (15) d'air d'apport s'étend au moins en partie dans l'enveloppe (550),
- une branche (30) pour de l'air d'évacuation, dans laquelle un courant volumétrique d'air provoqué par l'appareil (12) de ventilation, peut être acheminé dans l'enveloppe (550),
- une unité (200) de pile à combustible, qui est disposée de préférence dans l'enveloppe (550) et qui est incorporée à la branche (30) pour de l'air d'évacuation, de manière à ce que du gaz indésirable se dégageant dans l'unité (200) de pile à combustible puisse être dilué par le courant volumétrique d'air d'évacuation et être évacué, ensemble avec de la chaleur perdue, de l'unité (200) de pile à combustible,
- une unité (450) de batterie d'accumulateur, qui est disposée de préférence dans l'enveloppe (550) et qui est incorporée à la branche (30) pour de l'air d'évacuation, de manière à ce que du gaz indésirable se dégageant dans l'unité (450) de batterie d'accumulateur puisse être dilué par le courant volumétrique d'air et être évacué, ensemble avec de la chaleur perdue, de l'unité (450) de batterie d'accumulateur,
- une deuxième branche (20) pour de l'air, qui communique avec la branche (30) pour de l'air, dans laquelle la deuxième branche (20) pour de l'air de l'appareil (12) de ventilation est couplée thermiquement par l'échangeur de chaleur (34) de l'appareil (12) de ventilation à la première branche (14) pour de l'air, de sorte que de l'air (ABL) d'évacuation conduit vers l'extérieur en passant par la deuxième branche (20) pour de l'air puisse, en cas de besoin, céder au moins une partie de l'énergie calorifique qui y est contenue, en passant par l'échangeur de chaleur (34) de l'appareil (12) de ventilation, à la première branche (14) pour de l'air et de sorte qu'en même temps les gaz indésirables dilués par le courant volumétrique d'air puissent être évacués avec le courant volumétrique d'air en passant par le raccord (24) pour de l'air d'échappement, de manière à empêcher la formation de mélanges gazeux explosifs dans la centrale d'énergie domestique et que celle-ci puisse fonctionner de manière sûre.

2. Centrale (500) d'énergie domestique suivant la revendication 1, comprenant un raccord (17) pour de l'air d'apport et un raccord (25) pour de l'air d'évacuation pour mettre la centrale (500) d'énergie domestique en communication avec au moins un espace (26) de séjour à ventiler centralement, de manière à ce qu'un courant d'air passant dans la branche (15) d'air d'apport de la centrale (500) d'énergie domestique puisse être envoyé d'abord à l'espace (26) de séjour comme air (ZUL) d'apport et que de l'air (ABL) d'évacuation provenant de l'espace (26) de séjour puisse être acheminé dans la branche (30) pour de l'air d'évacuation de la centrale (500) d'énergie domestique.

3. Centrale (500) d'énergie domestique suivant la revendication 1 ou 2, dans laquelle l'enveloppe a plusieurs espaces partiels séparés les uns des autres, qui communiquent entre eux par la branche (30) pour l'air d'évacuation.

4. Centrale d'énergie domestique suivant l'une des revendications précédentes, comprenant une unité (300) d'électrolyse, qui est disposée à l'intérieur de l'enveloppe (550) et qui est incorporée à la branche (30) pour de l'air d'évacuation, de manière que du gaz indésirable se dégageant dans l'unité (300) d'électrolyse puisse être dilué par le courant volumétrique d'air et être, ensemble avec de la chaleur perdue, évacué de l'unité (300) d'électrolyse.

5. Centrale d'énergie domestique suivant l'une des revendications précédentes, **caractérisée en ce que** le courant d'air sortant de l'unité (200) de pile à combustible et pouvant être envoyé comme air (ABL') d'évacuation à la deuxième branche (20) pour de l'air de l'appareil (12) de ventilation est conduit, de manière à se mélanger d'abord à l'air (ABL) d'évacuation provenant d'un espace (26) de séjour respectif après être passé dans l'unité (300) d'électrolyse.

6. Centrale d'énergie domestique suivant l'une des revendications précédentes, comprenant un brûleur catalytique monté en aval de l'unité (300) d'électrolyse.

7. Centrale d'énergie domestique suivant l'une des revendications précédentes, comprenant un régleur de charge solaire, un onduleur en îlot et/ou un convertisseur courant continu / courant continu, qui est incorporé dans la branche (30) pour de l'air d'évacuation.

8. Centrale d'énergie domestique suivant l'une des revendications précédentes, dans lequel l'unité de pile à combustible est refroidie par du liquide et est couplée thermiquement au moins de temps à autre à un accumulateur d'eau chaude de la centrale d'énergie domestique.

9. Centrale d'énergie domestique suivant l'une des revendications précédentes, comprenant une partie de mélange, qui communique fluidiquement au moins de temps à autre avec l'unité (200) de pile à combustible, en ce que la partie de mélange peut recevoir du gaz de lavage sortant de l'unité (200) de pile à combustible, dans laquelle la partie de mélange communique avec l'appareil (12) de ventilation, de manière à ce qu'un courant d'air sortant de la partie de mélange puisse comme air (ABL) d'évacuation être envoyé à la deuxième branche (20) pour de l'air de l'appareil (12) de ventilation.

10. Centrale d'énergie domestique suivant l'une des revendications précédentes, dans lequel l'unité (200) de pile à combustible communique avec l'appareil (12) de ventilation, de manière à ce qu'un courant d'air passant dans la branche (15) d'air d'apport de la centrale (500) d'énergie domestique puisse également, comme air d'apport indirect, être envoyé d'abord à l'unité (200) de pile à combustible et, en passant par celle-ci le cas échéant, indirectement à l'espace (26) de séjour respectif.

11. Centrale d'énergie domestique suivant l'une des revendications précédentes, dans laquelle l'unité (200) de pile à combustible communique avec l'appareil (12) de ventilation et un espace (26) de séjour respectif, de manière à ce qu'un courant d'air sortant de l'unité (200) de pile à combustible puisse être envoyé d'une part comme air (ZUL) d'apport à un espace (26) de séjour respectif et puisse d'autre part comme air (ABL') d'évacuation, ensemble avec de l'air (ABL) d'évacuation provenant d'un espace (26) de séjour respectif, être envoyé à la deuxième branche (20) pour de l'air de l'appareil (12) de ventilation.

12. Procédé pour faire fonctionner une centrale (500) d'énergie domestique, en particulier une centrale (500) d'énergie domestique suivant l'une des revendications précédentes, comprenant les stades :
- passage d'air (AUL) extérieur dans une première branche (14) pour de l'air, en passant par un échangeur de chaleur (34) ou en contournant l'échangeur de chaleur (34) par un conduit (14') de dérivation pour de l'air extérieur, dans une branche (15) d'air d'apport de la centrale (500) d'énergie domestique,
- acheminement d'un courant volumétrique d'air provoqué par l'appareil (12) de ventilation dans une branche (30) pour de l'air d'évacuation de la centrale (500) d'énergie domestique, qui s'étend au moins par tronçon dans une enveloppe (550) de la centrale (500) d'énergie domestique,
- dilution du gaz indésirable, se dégageant dans l'unité (200) de pile à combustible, par le courant volumétrique d'air d'évacuation et évacuation du gaz dilué, ensemble avec de la chaleur perdue, de l'unité (200) de pile à combustible,
- dilution du gaz indésirable, se dégageant dans l'unité (450) de batterie d'accumulateur, par le courant volumétrique d'air et évacuation du gaz dilué, ensemble avec la chaleur perdue, de l'unité (450) de batterie d'accumulateur,
- passage d'air (ABL) d'évacuation, en passant par une deuxième branche (20) pour de l'air, qui communique avec la branche (30) d'évacuation, dans lequel la deuxième branche (20) pour de l'air de l'appareil (12) de ventilation est couplée thermiquement par l'échangeur de chaleur (34) de l'appareil (12) de ventilation à la première branche (14) pour de l'air, de sorte que de l'air d'évacuation, conduit vers l'extérieur en passant par la deuxième branche (20) pour de l'air, puisse, en cas de besoin, céder au moins une partie de l'énergie calorifique qui y est contenue, en passant par l'échangeur de chaleur (34) de l'appareil (12) de ventilation, à la première branche (14) pour de l'air et de sorte qu'en même temps les gaz indésirables dilués par le courant volumétrique d'air puissent être évacués avec le courant volumétrique d'air en passant par le raccord (24) d'air d'échappement, de manière à empêcher la formation de mélanges gazeux explosifs dans la centrale d'énergie domestique et que celle-ci puisse fonctionner de manière sûre.

13. Procédé suivant la revendication 12, comportant le stade :
- envoi d'air extérieur provenant de l'extérieur d'un espace de séjour comme air d'apport direct à un espace de séjour ou comme air d'apport indirect, d'abord en passant par un échangeur de chaleur gaz-gaz, qui transmet de la chaleur et le cas échéant de l'humidité de l'air d'échappement à l'air d'apport et/ou en passant par une unité de pile à combustible et ensuite en allant à l'espace de séjour.

14. Procédé suivant la revendication 12 ou 13, comprenant le stade :
- envoi d'air d'évacuation provenant de l'espace de séjour comme courant volumétrique de refroidissement et de lavage pour le lavage et l'absorption de la chaleur, en passant par les composants de la centrale d'énergie domestique et éventuellement par un échangeur de chaleur air-air pour la transmission de chaleur et le cas échéant d'humidité à l'air d'apport, en particulier avant une évacuation de celui-ci comme air d'échappement de la centrale d'énergie domestique.

15. Procédé suivant la revendication 12, comportant le stade :
- envoi d'air extérieur, provenant de l'extérieur d'un espace de séjour, comme air d'apport direct au système d'énergie domestique en passant d'abord par un échangeur de chaleur gaz-gaz pour le préchauffage ou éventuellement à des températures extérieures hautes en dérivation de cela et utilisation du courant volumétrique de refroidissement et de lavage pour la dilution et pour l'évacuation de gaz combustibles ainsi que pour l'absorption de chaleur en passant par les composants de la centrale d'énergie domestique.
